# EUROPÄISCHE PATENTSCHRIFT

(11) **EP 2 345 331 B1**
(45) Veröffentlichungstag und Bekanntmachung des Hinweises auf die Patenterteilung: **13.06.2012**
(21) Anmeldenummer: 10190449.8
(22) Anmeldetag: 09.11.2010
(51) Int. Cl.: A23G 3/20

(54) **Zuführeinrichtung für ein Beschichtungsmaterial**
Supply device for a coating material
Dispositif d'alimentation pour un matériau de revêtement

(30) Priorität: 19.01.2010 DE 102010000130
(43) Veröffentlichungstag der Anmeldung: 20.07.2011
(73) Patentinhaber: Lothar A. Wolf Spezialmaschinen GmbH, 32108 Bad Salzuflen (DE)
(72) Erfinder: Wolf, Michael Lothar, 32657 Lemgo-Brüntorf (DE)
(74) Vertreter: Dantz, Jan Henning

(56) Entgegenhaltungen:
- EP-A1- 1 985 188
- EP-A2- 1 958 517
- GB-A- 2 012 543
- US-A- 3 878 992
- US-A1- 2010 133 360

## Beschreibung

Die vorliegende Erfindung betrifft eine Zuführeinrichtung für Beschichtungsmaterial, insbesondere für Schokolade, mit einem Verteilerbalken, der eine Zuleitung für das Beschichtungsmaterial aufweist und an dem eine Vielzahl von verschließbaren Düsen vorgesehen sind, die zumindest teilweise mit einem Gas beaufschlagbar und als Sprühdüsen ausgebildet sind, wobei in dem Verteilerbalken eine mit der Zuleitung verbundene erste Kammer ausgebildet ist.

Es sind Dragiermaschinen bekannt (z.B. US 3,878,992), bei denen in einem Beschichtungsraum Verteilerbalken zur Ausgabe eines Beschichtungsmaterials angeordnet sind. Der Verteilerbalken erstreckt sich im Wesentlichen über die gesamte Länge des Beschichtungsraums und weist eine Vielzahl von verschließbaren Düsen zur Verteilung des Beschichtungsmaterials auf. Das meist zähflüssige Beschichtungsmaterial aus Schokolade und/oder Zuckerguss muss für den Beschichtungsvorgang exakt dosiert werden, um ein Verklumpen beim Beschichten oder eine unregelmäßige Beschichtung zu vermeiden. Dabei ist problematisch, dass der Volumenstrom durch die Düsen abhängig von der Entfernung zu einem Zulauf variiert. Zudem ist eine genaue Temperierung des Beschichtungsmaterials erforderlich.

Es ist daher Aufgabe der vorliegenden Erfindung, eine Zuführeinrichtung für ein Beschichtungsmaterial zu schaffen, das eine gleichmäßige Verteilung des Beschichtungsmaterials und eine exakte Dosierung ermöglicht.

Diese Aufgabe wird mit einer Zuführeinrichtung für ein Beschichtungsmaterial mit den Merkmalen des Anspruches 1 gelöst.

Erfingdungsgemäß umfasst die Zuführeinrichtung einen Verteilerbalken mit einer ersten Kammer und einer zweiten Kammer, die über eine mit Öffnungen versehene Trennwand voneinander getrennt sind, wobei die erste Kammer mit der Zuleitung verbunden ist und an die zweite Kammer die Düsen angeschlossen sind, wobei die Öffnungen so ausgebildet sind, dass in der zweiten Kammer in Längsrichtung des Verteilerbalkens im Wesentlichen der gleiche Druck herrscht. Dadurch kann durch definierte Strömungsverhältnisse die Dosierung bei der Zuführung von Beschichtungsmaterial wesentlich exakter erfolgen, da durch den annähernd gleichen Druck in der zweiten Kammer der Volumenstrom beim Öffnen der Düsen im Wesentlichen gleich ist. Die mit Öffnungen versehene Trennwand wirkt als Druckverteilerplatte, die den eintretenden Volumenstrom aus der Zuleitung über die Länge des Verteilerbalkens verteilt. Dadurch kann der Verteilerbalken auch besonders lang ausgebildet sein, beispielsweise länger als 1 m. Durch die exaktere Dosierung an den einzelnen Düsen ist es möglich, ein Beschichtungsergebnis mit höherer Qualität zu erreichen, insbesondere können Verklumpungen des Beschichtungsmaterials vermieden werden.

In der Trennwand sind dabei die Öffnungen so ausgebildet, dass deren Größe und/oder Anzahl mit zunehmender Entfernung vom Zulauf zunimmt. Die durch die Öffnungen ausgebildete Durchtrittsfläche wird somit in einem größeren Abstand von der Zuleitung größer, so dass Strömungsverluste des Beschichtungsmaterials von der Zuleitung bis zu der entsprechenden Öffnung ausgeglichen werden können.

Für einen kompakten Aufbau des Verteilerbalkens ist die Trennwand durch Bolzen zur Steuerung der Düsen durchsetzt. Dadurch kann die Trennwand im Wesentlichen horizontal ausgerichtet sein, wobei die Düsen an einer Unterseite des Verteilerbalkens angeordnet sind. Um den Aufbau des Verteilerbalkens nicht zu vergrößern, durchsetzen die Bolzen zur Steuerung der Düsen die Trennwand.

Gemäß einer bevorzugten Ausgestaltung sind eine Vielzahl der Düsen zur Abgabe des flüssigen Beschichtungsmaterials ausgebildet und mehrere dieser Düsen sind über Ventilnadeln verschließbar, die an einem gemeinsamen Steuerbalken fixiert sind. Dadurch kann über den gemeinsamen Steuerbalken ein Öffnen und Schließen einer Vielzahl von Düsen erfolgen, wobei die Steuermittel lediglich an dem Steuerbalken angreifen.

Vorzugsweise weist jede Sprühdüse einen Anschlusskörper auf, der teilweise an einer Außenwand des Verteilerbalkens anliegt. Dadurch kann der Wärmeübergang zwischen dem Verteilerbalken und dem Anschlusskörper genutzt werden, um die Temperatur der Sprühdüse auf einem ausreichend hohen Niveau zu halten, um ein schmelzbares Beschichtungsmaterial auf der gewünschten Temperatur zu halten. Ein Abkühlen und Verfestigen des Beschichtungsmaterials im Bereich der Sprühdüsen kann somit vermieden werden. Die Anlagefläche des Anschlusskörpers an der Außenwand des Verteilerbalkens bezogen auf die Querschnittsfläche des Anschlusskörpers in diesem Bereich kann mindestens 20 %, vorzugsweise mindestens 30 % oder 40 % betragen, um einen hohen Wärmeübergang zu gewährleisten.

Für eine effektive Beschichtung sind zudem Sprühdüsen zur Erzeugung eines Sprühstrahls vorgesehen, die einen Sprühkörper aufweisen, der mit Kanälen an eine unter Druck stehende Gasquelle, insbesondere Druckluft, angeschlossen ist. Der Sprühkörper kann dabei an den Anschlusskörper montiert sein, damit die Sprühdüse einen kompakten Aufbau besitzt, der nahe am Verteilerbalken angeordnet ist.

In einer vorteilhaften Ausgestaltung ist an oder in dem Verteilerbalken eine Heizeinrichtung zur Verflüssigung eines schmelzbaren Beschichtungsmaterials angeordnet. Dadurch kann der Verteilerbalken auf die gewünschte Temperatur erhitzt werden, um ein schmelzbaren Beschichtungsmaterial in einem optimierten flüssigen Zustand zu halten.

Zusätzlich kann an der zweiten Kammer des Verteilerbalkens ein Rücklauf zur Zirkulation des Beschichtungsmaterials vorgesehen sein, um auch bei geschlossenen Düsen eine Bewegung des Beschichtungsmaterials im Verteilerbalken zu gewährleisten, was eine Verfestigung des Materials verhindert.

Die Erfindung wird nachfolgend anhand eines Ausführungsbeispiels mit Bezug auf die beigefügten Zeichnungen näher erläutert. Es zeigen:

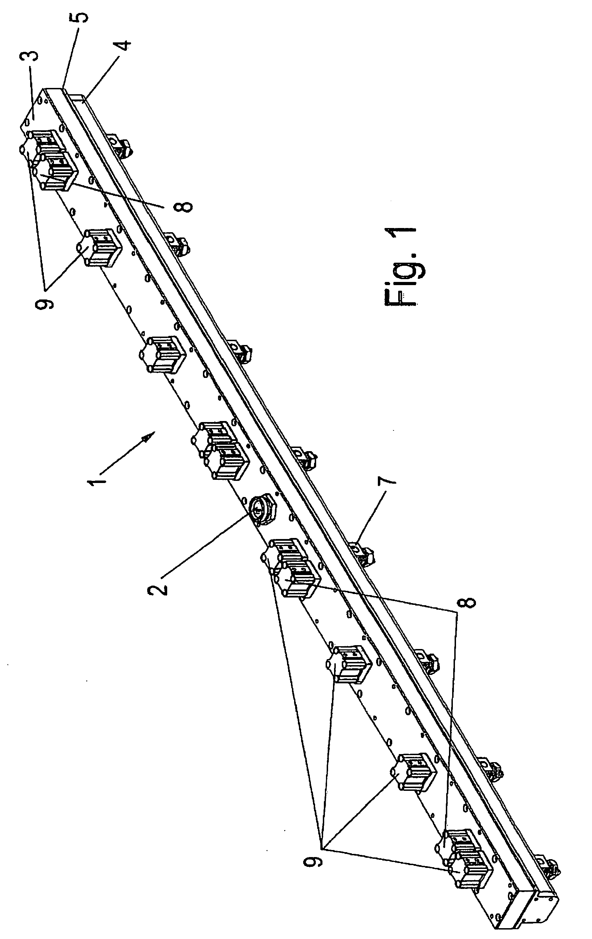

- Figur 1: eine perspektivische Ansicht eines Ausführungsbeispiels einer erfin- dungsgemäßen Zuführeinrichtung;

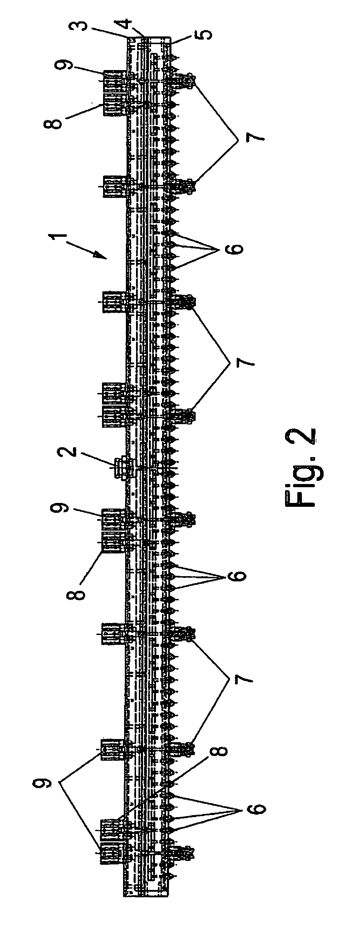

- Figur 2: eine Seitenansicht der Zuführeinrichtung der Figur 1;
- Figur 3: eine geschnittene Detailansicht des Verteilerbalkens der Figur 1;
- Figur 4: eine geschnittene Seitenansicht des Verteilerbalkens der Figur 1, und
- Figur 5: eine Detailansicht der Trennwand des Verteilerbalkens.

Eine Zuführeinrichtung für ein Beschichtungsmaterial, insbesondere Schokolade oder eine schokoladenhaltige Masse, umfasst einen Verteilerbalken 1, der in einem Beschichtungsraum einer Dragiervorrichtung montierbar ist. Der Verteilerbalken 1 umfasst mittig einen Zulauf 2 für das Beschichtungsmaterial, der an einem Oberteil 3 eines Gehäuses angeordnet ist. Der Verteilerbalken 1 umfasst zudem ein Unterteil 4 sowie eine Trennwand 5. An dem Unterteil 4 des Gehäuses sind eine Vielzahl von Düsen 6 und Sprühdüsen 7 angeordnet, die über Steuerblöcke 8 bzw. 9 geöffnet und geschlossen werden können.

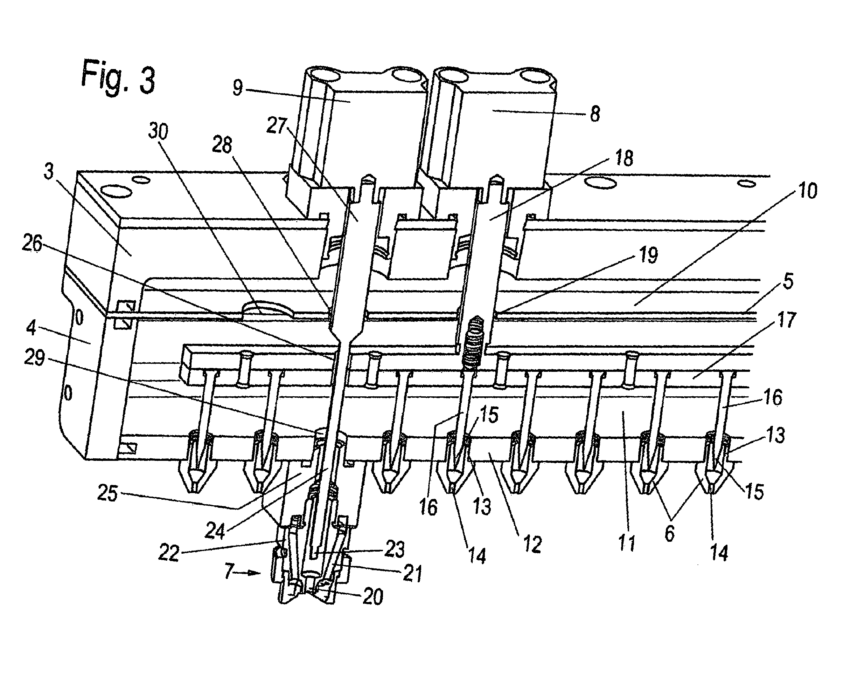

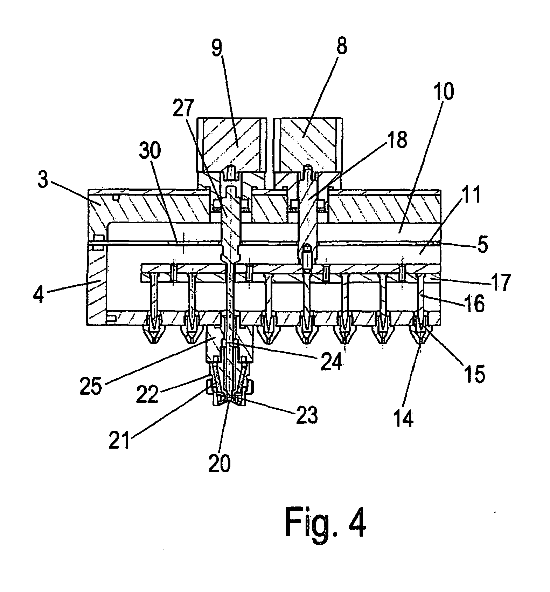

Wie in den Figuren 3 und 4 gezeigt ist, bilden die Trennwand 5 und das obere Gehäuseteil 3 eine erste Kammer 10 aus, die mit dem Zulauf 2 verbunden ist. Das untere Gehäuseteil 4 bildet zusammen mit der Tennwand 5 eine zweite Kammer 11 aus, die vom Volumen her größer ausgebildet ist als die erste Kammer 10. An der Unterseite des Gehäuseteils 4 befindet sich eine Platte 12, an der die Düsen 6 und 7 montiert sind.

Jede Düse 6 ist mit einem Gewindeabschnitt 13 in die Platte 12 eingeschraubt und weist an der Unterseite eine Öffnung 14 auf. Die Öffnung 14 der Düse 6 ist über eine Spitze 15 einer Ventilnadel 16 verschließbar. Um gleichzeitig mehrere Düsen 6 über die Ventilnadeln 16 zu verschließen, sind die Ventilnadeln 16 an einem in Längsrichtung des Verteilerbalkens 1 verlaufenden Steuerbalken 17 festgelegt, der in vertikale Richtung bewegbar ist. Zur Bewegung des Steuerbalkens 17 ist ein Steuerbolzen 18 vorgesehen, der durch eine Öffnung 19 in der Trennwand 5 durchgeführt ist und durch einen Steuerkopf 8 bewegbar ist. Wenn der Steuerkopf 8 den Steuerbolzen 18 nach unten bewegt, verschließen die Spitzen 15 die Öffnungen 14 in den Düsen 6. Jeder Steuerbalken 17 ist dabei über zwei Bolzen 18 gehalten.

Ferner sind an der Platte 12 mehrere voneinander beabstandete Sprühdüsen 7 montiert, die einen Sprühkörper 22 umfassen, der eine verschließbare Öffnung 20 für das Beschichtungsmaterial sowie Kanäle 21 für ein unter Druck stehendes Gas, insbesondere Druckluft, aufweist. Durch Öffnen der Kanäle 21 kann das aus der Öffnung 20 austretende Beschichtungsmaterial versprüht werden, was eine feine Beschichtung ermöglicht. Nach Abschalten der Druckluftzufuhr kann die Düse 7 auch wie die Düsen 6 zur Abgabe des flüssigen Beschichtungsmaterials genutzt werden.

Die Sprühdüsen 7 umfassen ferner einen Anschlusskörper 25, der an dem Boden 12 des Verteilerbalkens 1 angeschlossen ist. Der Anschlusskörper 25 steht dabei radial über eine Öffnung 29 in der Platte 12 hervor und bildet eine Anlagefläche aus, die einen guten Wärmeübergang zwischen der Platte 12 und dem Anschlusskörper 25 gewährleistet. Die Anlagefläche an dem Anschlusskörper 25 kann mehr als 20%, vorzugsweise mehr als 30 %, der Querschnittsfläche im Bereich der Platte 12 betragen.

Um die Sprühdüsen 7 zu verschließen, ist eine Ventilnadel 24 vorgesehen, die mit einer Spitze 23 in die Öffnung 20 eingesteckt werden kann. Hierfür ist die Ventilnadel 24 über einen Bolzen 27 mit einem Steuerkopf 9 verbunden, wobei der Bolzen 27 durch eine Öffnung 28 in der Trennwand 5 durchgeführt ist. In Figur 3 ist die Ventilnadeln 4 in der angehobenen Position gezeigt, während in Figur 4 die Ventilnadel 24 über den Steuerkopf 9 abgesenkt wurde und mit der Spitze 23 in die Öffnung 20 eingreift.

Die Trennwand 5 umfasst mehrere Öffnungen 30, die dafür sorgen, dass beim Einströmen des Beschichtungsmaterials durch die Zuleitung 2 der Druck im mittleren Bereich benachbart zu der Zuleitung 2 größer ist als in einem Endbereich des Verteilerbalkens 1. Hierfür sind in der Trennwand 5 mehrere Öffnungen 30 ausgebildet, deren Größe bzw. deren Anzahl mit zunehmender Entfernung zu der Zuleitung 2 zunimmt. Dadurch werden Strömungsverluste durch Reibung ausgeglichen, damit auch im Endbereich des Verteilerbalkens 1 in etwa der gleiche Volumenstrom durch die Düsen 6 bzw. 7 austritt wie im mittleren Bereich. Die Trennwand 5 ist dabei randseitig zwischen den Gehäuseteilen 3 und 4 festgeklemmt.

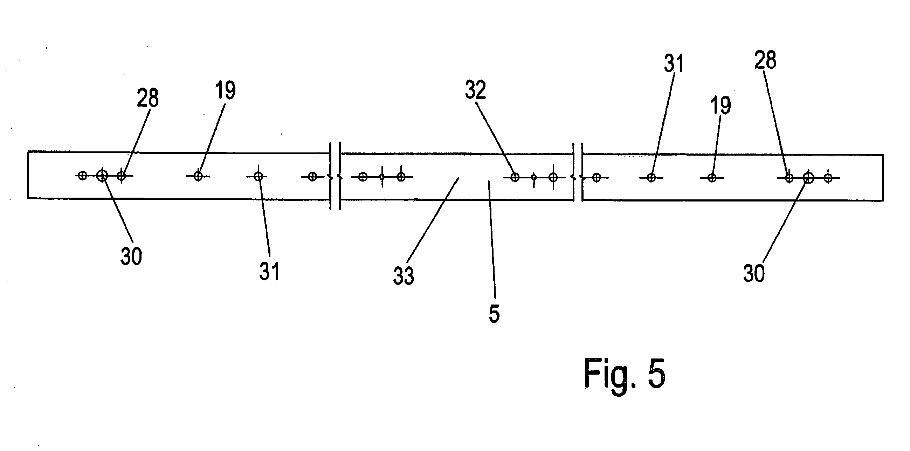

In Figur 5 ist die Trennwand 5 im Detail dargestellt. In einem mittleren Bereich 33 gegenüber dem Zulauf 2 ist die Trennwand 5 geschlossen ausgebildet, bis in Längsrichtung beabstandet Öffnungen 32 vorgesehen sind, deren Durchmesser kleiner ist als Öffnungen 30 in einem Endbereich des Verteilerbalkens 1 sind. Von dem mittleren Bereich 33 weiter entfernt liegende Öffnungen 31, können größer als die Öffnung 32 ausgebildet sein oder in einem geringerem Abstand angeordnet sein, so dass der durch die Öffnungen 31 gebildete Strömungswiderstand kleiner ist als der Strömungswiderstand durch die kleinen mittleren Öffnungen 32, was die Strömungsverluste beim Durchleiten der Beschichtungsmasse kompensiert. Die Anzahl und die Größe der Öffnungen 30, 31 und 32 ist dabei so gewählt, dass in der zweiten Kammer 11 im Wesentlichen der gleiche Druck herrscht, wenn die Beschichtungsmasse an den Düsen 6 und/oder 7 ausgegeben wird.

Die Trennwand 5 kann dabei aus einem gelochten Metallblech oder aus einer Kunststoffplatte hergestellt sein. Auch die Gehäuseteile 3 und 4 bestehen aus Metall und/oder Kunststoff.

## Patentansprüche

1. Zuführeinrichtung für ein Beschichtungsmaterial, insbesondere für Schokolade, mit einem Verteilerbalken (1), der einen Zulauf (2) für das Beschichtungsmaterial aufweist und an dem eine Vielzahl von verschließbaren Düsen (6, 7) vorgesehen sind, die zumindest teilweise mit einem Gas beaufschlagbar und als Sprühdüsen (7) ausgebildet sind, wobei in dem Verteilerbalken (1) eine mit dem Zulauf (2) verbundene erste Kammer (10) ausgebildet ist, **dadurch gekennzeichnet, dass** in dem Verteilerbalken (1) zur Ausbildung einer zweiten Kammer (11) eine mit Öffnungen (30, 31, 32) versehene Trennwand (5) angeordnet ist, an die zweite Kammer (11) die Düsen (6, 7) angeschlossen sind und die Öffnungen (30, 31, 32) so ausgebildet sind, dass in der zweiten Kammer (11) in Längsrichtung des Verteilerbalkens (1) im Wesentlichen der gleiche Druck herrscht, wobei in der Trennwand (5) Öffnungen (30, 31, 32) ausgebildet sind, deren Größe und/oder Anzahl mit zunehmender Entfernung vom Zulauf (2) zunimmt.

2. Zuführeinrichtung nach Anspruch 1, **dadurch gekennzeichnet, dass** die Trennwand (5) durch Bolzen (18, 27) zur Steuerung der Düsen (6, 7) durchsetzt ist.

3. Zuführeinrichtung nach Anspruch 1 oder 2, **dadurch gekennzeichnet, dass** eine Vielzahl der Düsen (6) zur Abgabe des flüssigen Beschichtungsmaterials ausgebildet sind und mehrere dieser Düsen (6) über Ventilnadeln (16) verschließbar sind, die an einem gemeinsamen Steuerbalken (17) fixiert sind.

4. Zuführeinrichtung nach einem der Ansprüche 1 bis 3, **dadurch gekennzeichnet, dass** jede Sprühdüse (7) einen Anschlusskörper (25) aufweist, der teilweise an einer Außenwand (12) des Verteilerbalkens (1) anliegt.

5. Zuführeinrichtung nach einem der Ansprüche 1 bis 4, **dadurch gekennzeichnet, dass** jede Sprühdüse (7) zur Erzeugung eines Sprühstrahls einen Sprühkörper (22) aufweist, der mit Kanälen (21) an eine unter Druck stehende Gasquelle, insbesondere Druckluft, angeschlossen ist.

6. Zuführeinrichtung nach einem der Ansprüche 1 bis 5, **dadurch gekennzeichnet, dass** an oder in dem Verteilerbalken (1) eine Heizeinrichtung zur Verflüssigung eines schmelzbaren Beschichtungsmaterials angeordnet ist.

7. Zuführeinrichtung nach einem der Ansprüche 1 bis 6, **dadurch gekennzeichnet, dass** die Trennwand (5) randseitig zwischen Gehäuseteilen (3, 4) des Verteilerbalkens (1) festgeklemmt ist.

8. Zuführeinrichtung nach einem der Ansprüche 1 bis 7, **dadurch gekennzeichnet, dass** an der zweiten Kammer (11) des Verteilerbalkens (1) ein Rücklauf zur Zirkulation des Beschichtungsmaterials vorgesehen ist.

9. Dragiervorrichtung mit einem Beschichtungsraum, **dadurch gekennzeichnet, dass** mindestens eine Zuführeinrichtung nach einem der vorhergehenden Ansprüche in dem Beschichtungsraum angeordnet ist.

## Claims

1. Supply device for a coating material, in particular for chocolate, with a distribution bar (1) which has an inlet (2) for the coating material and on which a multiplicity of closable nozzles (6, 7) are provided, which nozzles can be at least partially acted upon with a gas and are designed as spray nozzles (7), wherein a first chamber (10) which is connected to the inlet (2) is formed in the distribution bar (1), **characterized in that** a partition (5) which is provided with openings (30, 31, 32) is arranged in the distribution bar (1) in order to form a second chamber (11), the nozzles (6, 7) are connected to the second chamber (11), and the openings (30, 31, 32) are designed in such a manner that substantially the same pressure prevails in the second chamber (11) in the longitudinal direction of the distribution bar (1), wherein openings (30, 31, 32), the size and/or number of which increase/increases at increasing distance from the inlet (2), are formed in the partition (5).

2. Supply device according to Claim 1, **characterized in that** the partition (5) is permeated by pins (18, 27) for controlling the nozzles (6, 7).

3. Supply device according to Claim 1 or 2, **characterized in that** a multiplicity of the nozzles (6) are designed for dispensing the liquid coating material and a plurality of said nozzles (6) are closable via valve needles (16) which are fixed on a common control bar (17).

4. Supply device according to one of Claims 1 to 3, **characterized in that** each spray nozzle (7) has a connecting body (25) which partially bears against an outer wall (12) of the distribution bar (1).

5. Supply device according to one of Claims 1 to 4, **characterized in that**, in order to produce a spray jet, each spray nozzle (7) has a spray body (22) which is connected by channels (21) to a pressurized gas source, in particular compressed air.

6. Supply device according to one of Claims 1 to 5, **characterized in that** a heating device for liquefying a meltable coating material is arranged on or in the distribution bar (1).

7. Supply device according to one of Claims 1 to 6, **characterized in that** the partition (5) is firmly clamped on the edge side between housing parts (3, 4) of the distribution bar (1).

8. Supply device according to one of Claims 1 to 7, **characterized in that** a return for the circulation of the coating material is provided at the second chamber (11) of the distribution bar (1).

9. Dragée-making apparatus with a coating space, **characterized in that** at least one supply device according to one of the preceding claims is arranged in the coating space.

## Revendications

1. Dispositif d'amenée pour un matériau de revêtement, en particulier pour du chocolat, comportant une barre de distribution (1), qui présente une arrivée (2) pour le matériau de revêtement et sur laquelle sont prévues une pluralité de buses (6, 7) pouvant être fermées, lesquelles buses sont soumises au moins partiellement à l'action d'un gaz et sont réalisées comme des buses de pulvérisation (7), une première chambre (10) reliée à l'arrivée (2) étant réalisée dans la barre de distribution (1), **caractérisé en ce qu'**une paroi de séparation (5) pourvue d'ouvertures (30, 31, 32) est disposée dans la barre de distribution (1) pour réaliser une deuxième chambre (11), **en ce que** les buses (6, 7) sont raccordées à la deuxième chambre (11), et **en ce que** les ouvertures (30, 31, 32) sont réalisées de telle manière qu'essentiellement la même pression règne dans la deuxième chambre (11) dans la direction longitudinale de la barre de distribution (1), des ouvertures (30, 31, 32) dans la paroi de séparation (5), dont la dimension et/ou le nombre augmentent au fur et à mesure qu'on s'éloigne de l'arrivée (2).

2. Dispositif d'amenée selon la revendication 1, **caractérisé en ce que** la paroi de séparation (5) est traversée par des boulons (18, 27) servant à commander les buses (6, 7).

3. Dispositif d'amenée selon la revendication 1 ou 2, **caractérisé en ce qu'**une pluralité de buses (6) sont réalisées pour délivrer du matériau de revêtement liquide, et **en ce que** plusieurs de ces buses (6) peuvent être fermées par des pointeaux de soupape (16) qui sont fixés au niveau d'une barre de commande (17) commune.

4. Dispositif d'amenée selon l'une quelconque des revendications 1 à 3, **caractérisé en ce que** chaque buse de pulvérisation (7) présente un corps de raccordement (25) qui repose partiellement au niveau d'une paroi extérieur (12) de la barre de distribution (1).

5. Dispositif d'amenée selon l'une quelconque des revendication 1 à 4, **caractérisé en ce que** chaque buse de pulvérisation (7) servant à générer un jet diffusé présente un corps de pulvérisation (22), qui est raccordé par des canaux (21) à une source de gaz se trouvant sous pression, en particulier à de l'air comprimé.

6. Dispositif d'amenée selon l'une quelconque des revendications 1 à 5, **caractérisé en ce qu'**un dispositif de chauffage servant à fluidifier un matériau de revêtement fusible est disposé au niveau de la barre de distribution (1) ou dans celle-ci.

7. Dispositif d'amenée selon l'une quelconque des revendications 1 à 6, **caractérisé en ce que** la paroi de séparation (5) est serrée fixement côté bord entre les parties de boîtier (3, 4) de la barre de distribution (1).

8. Dispositif d'amenée selon l'une quelconque des revendications 1 à 7, **caractérisé en ce qu'**une sortie pour la circulation du matériau de revêtement est prévue au niveau de la deuxième chambre (11) de la barre de distribution (1).

9. Dispositif servant à fabriquer des dragées comportant un espace de revêtement, **caractérisé en ce qu'**au moins un dispositif d'amenée est disposé dans l'espace de revêtement selon l'une quelconque des revendications précédentes.
